# EUROPEAN PATENT SPECIFICATION

(11) **EP 3 970 944 B1**
(45) Date of publication and mention of the grant of the patent: **08.11.2023**
(21) Application number: 21194268.5
(22) Date of filing: 01.09.2021
(51) Int. Cl.: B29C 45/27

(54) **INSERT FOR HOT RUNNER**
EINSATZ FÜR EINEN HEISSKANAL
INSERT POUR CANAL CHAUFFÉ

(30) Priority: 16.09.2020 IT 202000021799
(43) Date of publication of application: 23.03.2022
(73) Proprietor: Inglass S.p.A., 31020 San Polo di Piave (Treviso) (IT)
(72) Inventor: Boz, Jacob Damiano, 31020 San Polo di Piave (TV) (IT); Vedelago, Enrico, 31020 San Polo di Piave (TV) (IT); Bisetto, Massimo, 31020 San Polo di Piave (TV) (IT)
(74) Representative: Citron, Massimiliano

(56) References cited:
- EP-A2- 0 374 549
- DE-A1-102006 018 336
- JP-A- 2003 011 176

## Description

The invention relates to a hot runner insert.

In an injection molding machine, a manifold distributes molten material to a plurality of nozzles of a hot runner. As mentioned in US7025585B2, a heat transfer at the gate area remains a problem to overcome and an ongoing obstacle to improving cycle times. In particular injection molding systems, with specific materials to be injected, provided with hot runner or not, with or without a valve stem (pin), the temperature of the injection area (injector gate/nozzle) into the cavity or mold must be controlled, i.e. the injection area must be cooled. In addition, the heat present around the nozzle gate, necessary for injection, must not be transmitted to the mold plates, thus to the cavity, because it would compromise the correct cooling process of the manufactured object, triggering surface defects or long (non-productive) cooling times.

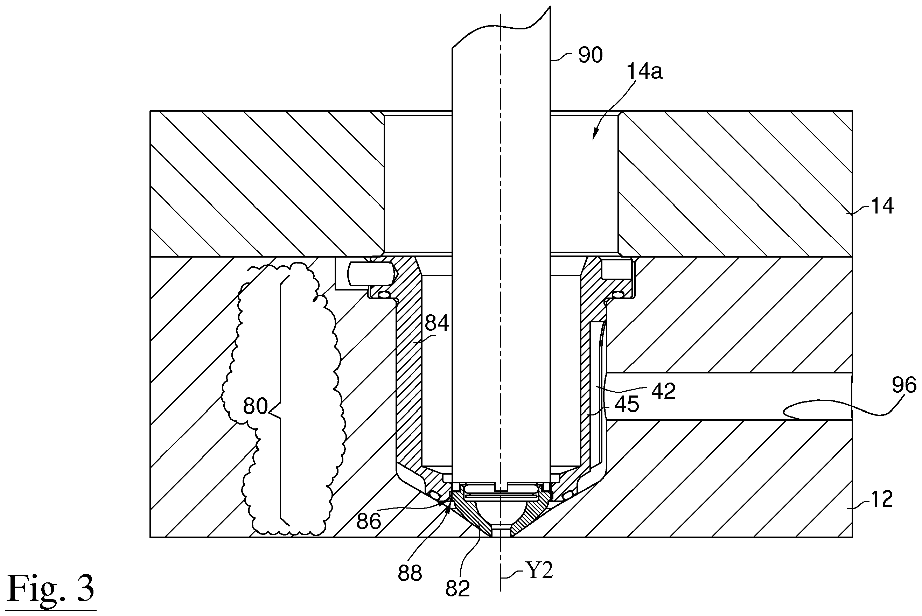

US7025585B2 describes an insert having a thermal shielding function at the nozzle tip to limit heat transmission from the hot runner's nozzle tip near the gate area to the mold plate. Referring *ibidem* to Fig. 3, the heat transmission from the tip 28, 30 to the plate 31 occurs through the element 46 of a cooled insert 24. The cooled insert 24 is secured in the plate 31 by the overlap of another plate 33. In Fig. 8, the cooled insert 24 is divided into two portions that are supported against each other: the upper portion 70 and the lower portion 24d, between which a hollow pocket is provided in which to insert insulating material. No fastening means are provided.

JP 2013 011176 and DE 10 2006 018336 disclose inserts for injection molding machines.

The main object of the invention is to improve this state of the art.

Another object is to create a new insert that is housed or can be housed in the mold plate and inside which an injector tip is inserted or can be inserted, in order to control the operating temperatures of the tip itself and to control the transmission of heat towards the mold plate, therefore towards the cavity.

A coolable insert is proposed to be arranged at the gate of an injection molding machine around a tip of a molten material injector, comprising or consisting of
a cup-shaped first element comprising or consisting of
   side walls that delimit a first (in use, upper) opening for housing the injector body, and
   a bottom equipped centrally with a second opening,
a second element, equipped with a third central opening having a major dimension (or diameter) that is smaller than that of the second opening,
the second element being connectable to said bottom so that the second and third opening are aligned.

The first element comprises an axis of substantial symmetry which is orthogonal to said bottom and passing through the center of the first and second openings, and the second element is movably connected to the first element so as to be able to move along said axis and thus adjust its own relative position with respect to the first element.

According to a preferred variant, the second element is connectable to the edges of the second opening, or to attachment points on the first element that are located at the bottom of the first element.

According to a preferred variant, the second element comprises a circular bushing-shaped portion on the outer lateral surface of which a thread is provided, and the circular bushing-shaped portion extends with a tapered portion which at the apex centrally comprises the third opening.

According to a preferred embodiment, the first and second elements comprise respective threads through which they can be coupled by screwing one with the other. Thanks to the mutual screwing, the relative position adjustment of the second element with respect to the first element is achieved.

In particular, the threading of the first element is placed:
on the edges of the second opening and/or
on the outer or inner lateral surface of a circular bushing-shaped portion in the center of which the second opening.is arranged.

In particular, the threading of the second element is arranged
on the inner lateral surface of a circular bushing-shaped portion, and/or
on the outer lateral surface of a circular bushing-shaped portion,
the circular bushing-shaped portion extending with a tapered (e.g. conical) portion that at the apex centrally comprises the third opening.

According to a preferred variant, the first and second elements comprise two respective circular mutual-abutment areas. In particular, the circular abutment area of the first element is located on the outer surface of said bottom. Thus, the first and second elements are couplable by mounting the second element on the outside of the bottom and then screwing them together.

According to a different preferred variant, the first and second elements are structured so that the second element is snugly insertable into - and can completely pass through - the second opening. Thus, the first and second elements are couplable by inserting the second element inside the bottom and then screwing them together.

According to a preferred variant, the outer surface of the lateral walls of the first element comprise one or more grooves for cooling fluid.

Various mounting methods are possible for the above-mentioned insert.

According to a preferred variant, the insert is mounted in a complementary cavity of a first plate. A second plate, provided with a pass-through opening delimited by edges, is directly superimposed on the first plate so that said pass-through opening is coaxial to the insert and said edges abut against the upper end of the side walls of the first element, blocking it.

According to another preferred variant, the insert is mounted in a complementary cavity of a plate, a ring being
directly superimposed on, and abutting against, the upper end of the lateral walls of the first element, and
fixed to the plate, e.g. by means of fasteners such as screws.

Another aspect of the invention relates to an injection molding machine comprising.
a molten material injector comprising a tip,
a plate comprising a cavity with an injection nozzle,
an insert according to any of the variants defined above, wherein
the tip is housed inside the insert and the insert is housed inside the cavity.

The advantages of the invention will be even clearer from the following description of a coolable insert, making reference to the attached drawing in which
- Figure 1 shows a three-dimensional view of an insert,
- Figure 2 shows a cross-sectional view of the insert from Fig. 1 mounted together with an injection tip;
- Figure 3 shows a cross-sectional view of a second insert mounted together with an injection tip;
- Figure 4 and 5 show a cross-sectional view of an insert assembled according to a different method.

In the figures equal elements are indicated by equal numbers. Terms such as lower and upper refer to the elements as in use.

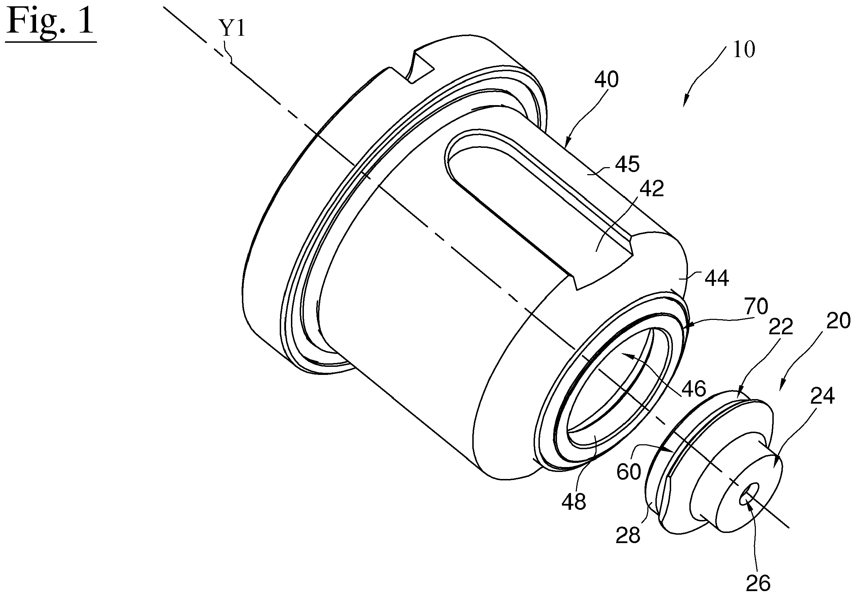

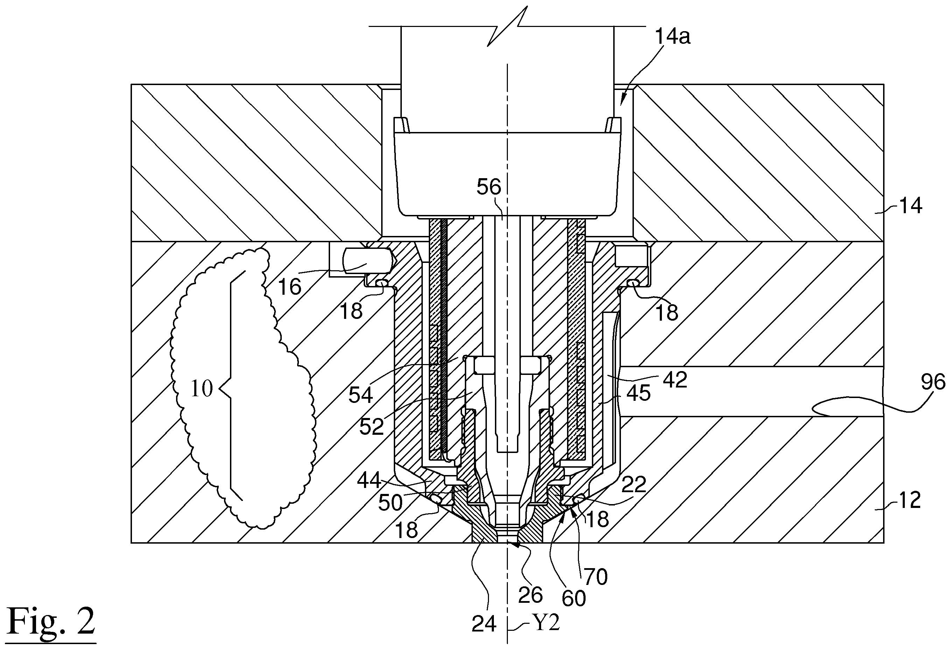

Referring to Fig. 1, a coolable insert 10 comprises the assembly of a lower element 20 and an upper element 40. The element 40 is cup-shaped with cylindrical walls 45 and a bottom 44 centrally provided with an opening 46. Essentially, the element 40 has a symmetrical shape about a central axis Y1, which passes through the center of the opening 46. The element 40 has a side groove 42, connected to a channel 96 (see Fig. 2), for the passage of a cooling fluid, and a pair of seals or O-ring seals

A channel 96 for entry of water is shown in the figures, there being an exit channel (not shown) e.g. in a symmetrical or diametrically opposite position

The edges of the opening 46 comprise a thread 48 (not shown).

The element 20 comprises a circular bushing-shaped portion 22 that is prolonged by a tapered (e.g. cylindrical (see Fig. 2) or conical (see Fig. 3)) portion 24, which at the apex centrally comprises an opening 26. The element 20 also has a substantially symmetrical shape about a central axis Y1, which passes through the center of the opening 26.

The opening 46 has a larger diameter than that of the opening 26, while the circular bushing-shaped portion 22 comprises on its outer lateral surface a thread 28 that is complementary to the thread 48.

By screwing the threads 28, 48 one on top of the other, the element 20 is connectable to the bottom 44 so that the openings 26, 46 are aligned. Thus, the two elements 40, 20 joined together form a seat exploited to insert the injector within which the molten material flows.

Fig. 2 shows the assembly of the coolable insert 10 in an injection molding machine.

The coolable insert 10 is housed in contact with the inner surface of a cavity formed in a mold plate 12. The cavity of the mold plate 12 has symmetry axis Y2, The coolable insert 10 is fixed in the cavity by superimposing a plate 14, and e.g. by an anti-rotation dowel 16, and so that the axes Y1 and Y2 are parallel, in particular coincident.

The circular bushing-shaped portion 22 internally guides and is in contact with a ferrule 50, which in turn is fixed to an injector 54 capable of holding a tip 52. The latter guides a stem (pin) 56 to regulate the flow of molten material injected into the mold cavity.

The movable coupling between the elements 20, 40 allows the displacement of the element 20 with respect to the element 40 along the axis Y1 (or Y2) to adjust the relative position between the elements 20, 40 and ensure the coupling of the conical surfaces with the corresponding ones made on the mold plate 12.

The structure of the insert 10 then allows correctly locating both elements 20, 40 within the plate 12, since the thread 28, 48 allows adjusting the total 5 height of the insert 10. In particular, by means of the afore-mentioned positional adjustment, the correct functionality of the gaskets 18 can be obtained in addition to the correct coupling of the conical zones of the element 20.

Generally, the coolable insert 10 is supplied/manufactured by the hot runner supplier, while the mold plate is made by the mold-maker. The described coolable insert allows compensating for any inaccuracies in the mechanical machining of the seat.

The making of the insert 10 in two separate elements 20, 40 also allows optimizing the materials used because the element 20 is subject to greater 15 wear. Indeed, it is subject to the friction of the molten material. It is therefore possible to use more resistant materials for the element 20, consequently more expensive, and to replace it more easily and economically.

The elements 20, 40 preferably comprise two respective circular areas 60, 70 of mutual abutment. In the variant of Fig. 2, the circular area 70 is located on the outer surface of the bottom 44. Then the elements 20, 40 are couplable by mounting the element 20 on the outside of the bottom 44 and then screwing them together.

Fig, 3 shows a variant of coolable insert 80, which like the insert 10 is composed of the assembly of a lower element 82 and an upper element 84, the element 82 is made substantially like the element 20, while the element 84 is made substantially like the element 40.

In this variant, there is no end-stroke abutment between the lower element 82 and the upper element 84, the former being able to be screwed into the latter limitlessly. That is, the lower element 82 and the upper element 84 are structured in such a way that the element 82 can be inserted into the element 84 from above and then screwed in until the conical surface of the lower element 82 abuts against a complementary surface of the plate 12.

Thus, the elements 82, 84 are couplable by mounting the element 82 inside the bottom of the element 84 and then screwing them together, e.g. by using a wrench or special tool 90. The latter is also used to modify/calibrate the vertical position of the element 82 so as to position the aforementioned conical surfaces correctly, and compensate for any play or error.

The lower shape of the element 20, cylindrical or with tapered tip, results in a larger or smaller influence/trace on the finished piece.

Figures 2-3 illustrate inter alia a method for mounting the coolable insert 10, 80 in a mold. The insert 10, 80 is inserted into a complementary cavity of the mold plate 12. The second mold plate 14 has a pass-through opening 14a bounded by edges, and is directly superimposed on the cavity 12 so that the pass-through opening 14a is coaxial to the insert 10, 80 and its edges abut against the upper end of the cylindrical walls 45.

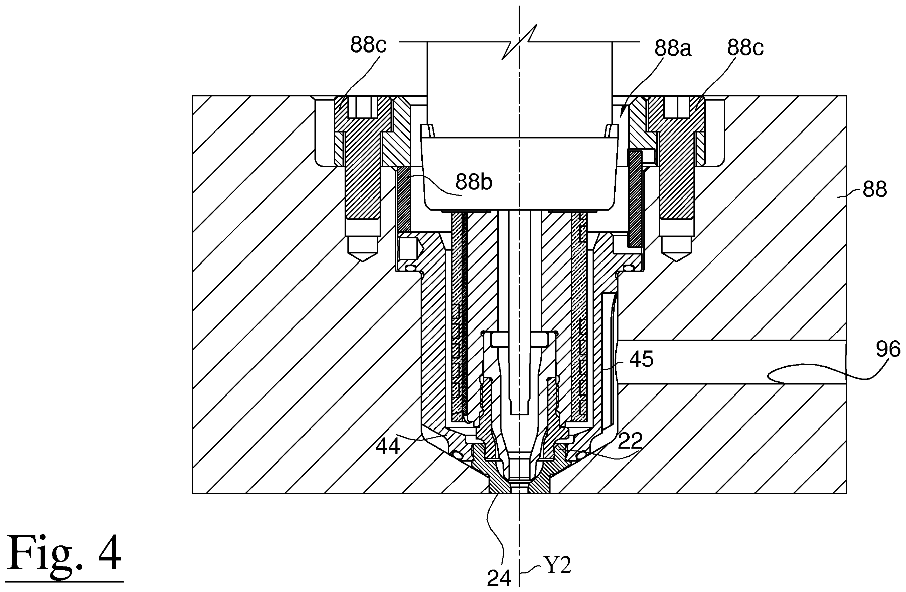

According to another variant, see Fig. 4, the insert 10, 80 is mounted in a complementary cavity 88a of a plate 88. A ring 88b is directly superimposed to and abutting against the upper end of the lateral walls 45, and is attached to the plate 88 by means such as screws 88c.

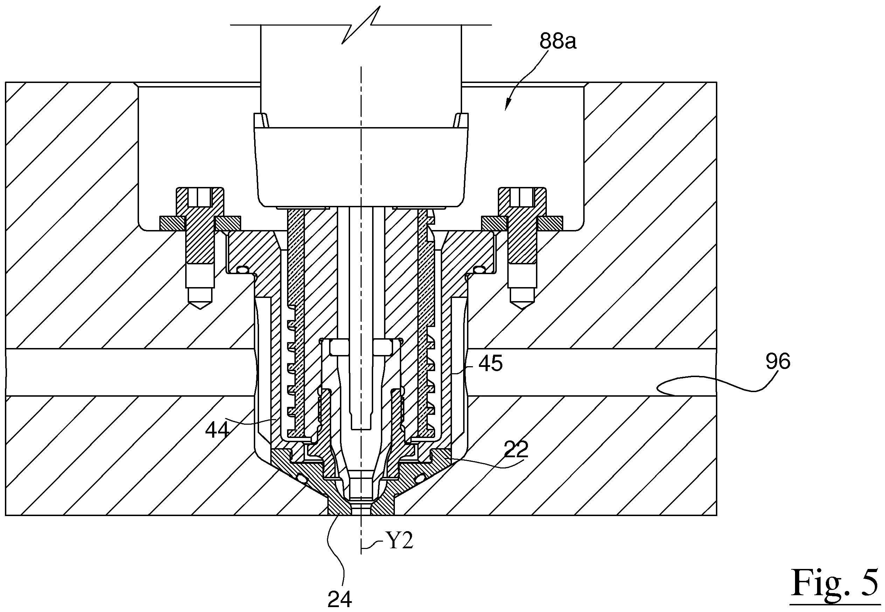

Fig. 5 shows a different version, in which the element 20 is fixed to the element 40 via an internal rather than external thread.

The types of mounting shown can be used for any variant of the insert.

Note that the invention is also applicable in systems with pinless injectors, called torpedo or free-flowing injectors.

## Claims

1. Insert (10; 80) adapted to be placed at the gate of an injection molding machine around a tip of a molten material injector, comprising or consisting of:
- a cup-shaped first element (40) comprising or consisting of
lateral walls (45) that delimit a first opening for housing the injector body, and
a bottom (44) centrally provided with a second opening (46),
- a second element (20), provided with a third central opening (26) having a major dimension that is smaller than that of the second opening (36),
the second element (20) being connectable to said bottom (44 ) so that the second (46) and third opening (26) are aligned,
**characterized in that**
the first element (40) comprises an axis of substantial symmetry (Y1; Y2) that is orthogonal to the bottom (44) and passing through the center of the first and second opening,
and the second element (20) is movably connected to the first element (40) so that it can move along said axis and thereby adjust its relative position with respect to the first element (40).

2. Insert according to claim 1, wherein the second element (20) is connectable to the edges of the second opening (46).

3. Insert according to any previous claim, wherein the first (40) and second element (20) comprise respective threads (28, 48) through which they can be coupled together by screwing one with the other.

4. Insert according to claim 3, wherein the thread (48) of the first element (40) is placed on the margins of the second opening (46).

5. Insert according to claim 3 or 4, wherein the threading of the second element is arranged
on the inner lateral surface of a circular bushing-shaped portion, and/or
on the outer lateral surface of a circular bushing-shaped portion,
the circular bushing-shaped portion extending with a tapered portion that at the apex centrally comprises the third opening.

6. Insert according to any previous claim, wherein the second element (20) comprises a circular bushing-shaped portion (22) on the lateral surface of which a thread is provided, the circular bushing-shaped portion (22) extending with a tapered portion (24).

7. Insert according to claim 6, wherein the tapered portion (24) has a conical shape.

8. Insert according to any previous claim, wherein the first (40) and second (20) elements comprise two respective areas (60, 70) for reciprocal abutting, the circular abutting area of the first element (40) being placed on the external surface of the bottom (44).

9. Insert according to any previous claim 1 to 6, wherein the first and second element (40, 20) are structured so that the second element (20) is snugly insertable into - and can pass through the - second opening (46).

10. Insert according to any previous claim, wherein the outer surface of the lateral walls of the first element (40) comprise at least one groove (42) for cooling fluid.

11. Injection molding machine comprising:
- a molten material injector comprising a tip,
- a plate comprising a cavity with an injection nozzle,
- an insert (10; 80) according to any of the preceding claims, wherein
the tip is housed inside the insert and the insert is housed inside the cavity.

12. Mounting method for an insert according to any of claims 1 to 10, wherein
the insert is mounted in a complementary cavity of a first plate, and
a second plate, provided with a pass-through opening delimited by edges, is directly superimposed on the first plate
so that said pass-through opening is coaxial to the insert and said edges abut against the upper end of the side walls of said first element, blocking it.

13. Mounting method for an insert according to any of claims 1 to 10, wherein
the insert is mounted in a complementary cavity of a plate,
a ring being
directly superimposed on, and abutting against, the upper end of the lateral walls of said first element, and
fixed to the plate.

## Patentansprüche

1. Einsatz (10; 80), der dazu geeignet ist, am Anguss einer Spritzgießmaschine um eine Spitze eines Injektors für geschmolzenes Material herum platziert zu werden, umfassend oder bestehend aus:
- ein becherförmiges erstes Element (40), umfassend oder bestehend aus
Seitenwände (45), die eine erste Öffnung zur Unterbringung des Injektorkörpers begrenzen, und
einen Boden (44), der mittig mit einer zweiten Öffnung (46) versehen ist,
- ein zweites Element (20), das mit einer dritten zentralen Öffnung (26) versehen ist, deren Hauptabmessung kleiner als die der zweiten Öffnung (36) ist,
wobei das zweite Element (20) mit dem Boden (44) verbindbar ist, so dass die zweite (46) und die dritte Öffnung (26) ausgerichtet sind,
**dadurch gekennzeichnet das**
erste Element (40) eine im Wesentlichen symmetrische Achse (Y1; Y2) umfasst, die orthogonal zum Boden (44) ist und durch die Mitte der ersten und zweiten Öffnung verläuft,
und das zweite Element (20) beweglich mit dem ersten Element (40) verbunden ist, so dass es sich entlang der Achse bewegen und dadurch seine relative Position in Bezug auf das erste Element (40) einstellen kann.

2. Einsatz nach Anspruch 1, wobei das zweite Element (20) mit den Rändern der zweiten Öffnung (46) verbindbar ist.

3. Einsatz nach einem der vorhergehenden Ansprüche, wobei das erste (40) und das zweite Element (20) jeweilige Gewinde (28, 48) aufweisen, durch die sie durch Verschrauben miteinander verbunden werden können.

4. Einsatz nach Anspruch 3, wobei der Faden (48) des ersten Elements (40) an den Rändern der zweiten Öffnung (46) platziert ist.

5. Einsatz nach Anspruch 3 oder 4, wobei das Gewinde am zweiten Element angeordnet ist auf der inneren Mantelfläche eines kreisförmigen buchsenförmigen Abschnitts und/oder an der äußeren Mantelfläche eines kreisförmigen buchsenförmigen Abschnitts, Der kreisförmige buchsenförmige Abschnitt erstreckt sich mit einem verjüngten Abschnitt, der an der Spitze mittig die dritte Öffnung umfasst.

6. Einsatz nach einem der vorhergehenden Ansprüche, wobei das zweite Element (20) einen kreisförmigen buchsenförmigen Abschnitt (22) umfasst, an dessen Seitenfläche ein Gewinde vorgesehen ist, wobei der kreisförmige buchsenförmige Abschnitt (22) konisch verläuft Teil (24).

7. Einsatz nach Anspruch 6, wobei der verjüngte Abschnitt (24) eine konische Form aufweist.

8. Einsatz nach einem der vorhergehenden Ansprüche, wobei das erste (40) und das zweite (20) Element zwei jeweilige Bereiche (60, 70) zum gegenseitigen Anstoßen umfassen, wobei der kreisförmige Anstoßbereich des ersten Elements (40) auf der Außenseite platziert ist Oberfläche des Bodens (44).

9. Einsatz nach einem der vorhergehenden Ansprüche 1 bis 6, wobei das erste und zweite Element (40, 20) so strukturiert sind, dass das zweite Element (20) genau in die zweite Öffnung (46) einführbar ist und durch diese hindurchgehen kann.

10. Einsatz nach einem der vorhergehenden Ansprüche, wobei die Außenfläche der Seitenwände des ersten Elements (40) mindestens eine Nut (42) für Kühlflüssigkeit aufweist.

11. Spritzgießmaschine umfassend
- einen Injektor für geschmolzenes Material, der eine Spitze umfasst,
- eine Platte mit einem Hohlraum mit einer Einspritzdüse,
- ein Einsatz (10; 80) nach einem der vorhergehenden Ansprüche, wobei Die Spitze ist im Einsatz untergebracht und der Einsatz ist im Hohlraum untergebracht.

12. Montageverfahren für einen Einsatz nach einem der Ansprüche 1 bis 10, wobei
der Einsatz wird in einem komplementären Hohlraum einer ersten Platte montiert, und
eine zweite Platte, die mit einer durch Kanten begrenzten Durchgangsöffnung versehen ist, liegt direkt auf der ersten Platte
so dass die Durchgangsöffnung koaxial zum Einsatz ist und die Kanten am oberen Ende der Seitenwände des ersten Elements anliegen und dieses blockieren.

13. Montageverfahren für einen Einsatz nach einem der Ansprüche 1 bis 10, wobei
der Einsatz wird in einem komplementären Hohlraum einer Platte montiert,
ein Ringwesen direkt auf dem oberen Ende der Seitenwände des ersten Elements aufliegend und daran anliegend, und an der Platte befestigt.

## Revendications

1. Insert (10; 80) adapté pour être placé à la porte d'une machine de moulage par injection autour d'une pointe d'un injecteur de matière fondue, comprenant ou consistant en
- un premier élément en forme de coupelle (40) comprenant ou consistant en
des parois latérales (45) délimitant une première ouverture de logement du corps d'injecteur, et
un fond (44) pourvu centralement d'une deuxième ouverture (46),
- un deuxième élément (20), muni d'une troisième ouverture centrale (26) ayant une dimension principale inférieure à celle de la deuxième ouverture (36),
le deuxième élément (20) pouvant être relié audit fond (44) de sorte que la deuxième (46) et la troisième ouverture (26) soient alignées,
**caractérisé en ce que**
le premier élément (40) comporte un axe de symétrie sensible (Y1; Y2) orthogonal au fond (44) et passant par le centre des première et seconde ouvertures,
et le deuxième élément (20) est relié de manière mobile au premier élément (40) de sorte qu'il peut se déplacer le long dudit axe et régler ainsi sa position relative par rapport au premier élément (40).

2. Insert selon la revendication 1, dans lequel le deuxième élément (20) est connectable aux bords de la deuxième ouverture (46).

3. Insert selon l'une quelconque des revendications précédentes, dans lequel le premier (40) et le deuxième élément (20) comportent des filetages respectifs (28, 48) par lesquels ils peuvent être couplés entre eux par vissage l'un avec l'autre.

4. Insert selon la revendication 3, dans lequel le filetage (48) du premier élément (40) est placé sur les marges de la deuxième ouverture (46).

5. Insert selon la revendication 3 ou 4, dans lequel le filetage du deuxième élément est agencé sur la surface latérale intérieure d'une portion circulaire en forme de douille, et/ou sur la surface latérale extérieure d'une portion circulaire en forme de douille, la partie en forme de douille circulaire s'étendant avec une partie conique qui, au sommet, comprend centralement la troisième ouverture.

6. Insert selon l'une quelconque des revendications précédentes, dans lequel le deuxième élément (20) comprend une portion en forme de douille circulaire (22) sur la surface latérale de laquelle est prévu un filetage, la portion en forme de douille circulaire (22) se prolongeant par une conicité partie (24).

7. Insert selon la revendication 6, dans lequel la partie tronconique (24) a une forme conique.

8. Insert selon l'une quelconque des revendications précédentes, dans lequel les premier (40) et deuxième (20) éléments comportent deux zones respectives (60, 70) d'appui réciproque, la zone d'appui circulaire du premier élément (40) étant placée sur la face externe surface du fond (44).

9. Insert selon l'une quelconque des revendications précédentes de 1 à 6, dans lequel le premier et le deuxième élément (40, 20) sont structurés de telle sorte que le deuxième élément (20) est parfaitement insérable dans - et peut passer à travers la - deuxième ouverture (46).

10. Insert selon l'une quelconque des revendications précédentes, dans lequel la surface externe des parois latérales du premier élément (40) comporte au moins une rainure (42) pour le refroidissement du fluide.

11. Machine de moulage par injection comprenant
- un injecteur de matière fondue comprenant une pointe,
- une plaque comprenant une cavité avec une buse d'injection,
- un insert (10; 80) selon l'une quelconque des revendications précédentes, dans lequel
la pointe est logée à l'intérieur de l'insert et l'insert est logé à l'intérieur de la cavité.

12. Procédé de montage d'un insert selon l'une quelconque des revendications 1 à 10, dans lequel
l'insert est monté dans une cavité complémentaire d'une première plaque, et
une deuxième plaque, munie d'une ouverture traversante délimitée par des bords, est directement superposée à la première plaque
de sorte que ladite ouverture traversante est coaxiale à l'insert et lesdits bords butent contre l'extrémité supérieure des parois latérales dudit premier élément en le bloquant.

13. Procédé de montage d'un insert selon l'une quelconque des revendications 1 à 10, dans lequel
l'insert est monté dans une cavité complémentaire d'une plaque,
un anneau étant
directement superposé et en butée contre l'extrémité supérieure des parois latérales dudit premier élément, et
fixée à la plaque.
